(19) Europäisches Patentamt
European Patent Office
Office européen des brevets

(11) **EP 3 547 159 B1**

(12) **FASCICULE DE BREVET EUROPEEN**

(45) Date de publication et mention de la délivrance du brevet:
**07.06.2023 Bulletin 2023/23**

(51) Classification Internationale des Brevets (IPC):
**G06N 7/02** *(2006.01)*   **G06F 17/17** *(2006.01)*
**G06N 5/04** *(2023.01)*   **G08G 5/00** *(2006.01)*

(21) Numéro de dépôt: **19165943.2**

(22) Date de dépôt: **28.03.2019**

(52) Classification Coopérative des Brevets (CPC):
**G06F 17/17; G06N 7/023;** G08G 5/0008;
G08G 5/0078; G08G 5/0082

(54) **PROCÉDÉ D'ÉVALUATION DE LA CONFORMITÉ D'UN SYSTÈME DE PISTAGE À UN ENSEMBLE D'EXIGENCES ET DISPOSITIFS ASSOCIÉS**

VERFAHREN ZUR BEWERTUNG DER ÜBEREINSTIMMUNG EINES TRACKING-SYSTEMS MIT EINER GESAMTHEIT VON ANFORDERUNGEN, UND ENTSPRECHENDE VORRICHTUNGEN

METHOD FOR ASSESSING THE CONFORMITY OF A TRACKING SYSTEM WITH A SET OF REQUIREMENTS AND ASSOCIATED DEVICES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.03.2018 FR 1800249**

(43) Date de publication de la demande:
**02.10.2019 Bulletin 2019/40**

(73) Titulaire: **THALES**
**92400 Courbevoie (FR)**

(72) Inventeurs:
• **Labreuche, Christophe**
**91767 PALAISEAU CEDEX (FR)**
• **Honore, Nicolas**
**94628 RUNGIS (FR)**
• **Pignard, Olivier**
**94628 RUNGIS (FR)**

(74) Mandataire: **Lavoix**
**2, place d'Estienne d'Orves**
**75441 Paris Cedex 09 (FR)**

(56) Documents cités:
**CN-A- 101 477 623    CN-A- 103 903 101**

• PEK HUI FOO ET AL: "Application of intent inference for surveillance and conformance monitoring to aid human cognition", INFORMATION FUSION, 2007 10TH INTERNATIONAL CONFERENCE ON, IEEE, PI, juillet 2007 (2007-07), pages 1-8, XP031193975, ISBN: 978-0-662-45804-3
• VAN DEN BROEK P M ED - ISIK C ET AL: "Fuzzy reasoning with continuous piecewise linear membership functions", FUZZY INFORMATION PROCESSING SOCIETY, 1997. NAFIPS '97., 1997 ANNUAL M EETING OF THE NORTH AMERICAN SYRACUSE, NY, USA 21-24 SEPT. 1997, NEW YORK, NY, USA,IEEE, US, 21 septembre 1997 (1997-09-21), pages 371-376, XP010246407, DOI: 10.1109/NAFIPS.1997.624069 ISBN: 978-0-7803-4078-7
• CUSTINNE BERNARD ET AL: "Surveillance chain performance assessment against ESASSP", 2014 TYRRHENIAN INTERNATIONAL WORKSHOP ON DIGITAL COMMUNICATIONS - ENHANCED SURVEILLANCE OF AIRCRAFT AND VEHICLES (TIWDC/ESAV), IEEE, 15 septembre 2014 (2014-09-15), pages 12-16, XP032677352, DOI: 10.1109/TIWDC-ESAV.2014.6945440
• Eric Potier ET AL: "EUROCONTROL Specification EUROCONTROL Specification for ATM Surveillance System Performance (Volume 1)", EUROCONTROL-SPEC-0147, 30 mars 2012 (2012-03-30), pages 1-88, XP055531807, ISBN: 978-2-87497-022-1 Extrait de l'Internet: URL:https://www.eurocontrol.int/sites/defa ult/files/publication/files/20123003-esass p-spec-vol1-v1.0.pdf [extrait le 2018-12-07]

- LIU D M ET AL: "Trajectory tracking in aircraft landing operations management using the adaptive neural fuzzy inference system", COMPUTERS & MATHEMATICS WITH APPLICATIONS, ELSEVIER, AMSTERDAM, NL, vol. 56, no. 5, septembre 2008 (2008-09), pages 1322-1327, XP022824374, ISSN: 0898-1221, DOI: 10.1016/J.CAMWA.2007.11.052 [extrait le 2008-05-22]
- Giancarlo Ferrari-Trecate ET AL: "A New Learning Method for Piecewise Linear Regression" In: "Serious Games", 2002, Springer International Publishing, Cham, XP055532026, ISSN: 0302-9743 ISBN: 978-3-642-15171-2 vol. 2415, pages 444-449, DOI: 10.1007/3-540-46084-5_72, * le document en entier *

**Description**

La présente invention concerne un procédé d'évaluation de la conformité d'un système de pistage à un ensemble d'exigences. La présente invention se rapporte également à un produit programme d'ordinateur et à un support lisible d'informations permettant la mise en oeuvre du procédé.

Dans le domaine de l'avionique, le système de pistage est un système d'une grande importance et ce, d'autant plus que le système de pistage garantit l'absence de collisions entre les avions. Le système de pistage est donc un système devant respecter un ensemble de contraintes obligatoires pour être certifié et des recommandations pour améliorer la sécurité.

Il est donc souhaitable de pouvoir évaluer le score de conformité du système de pistage.

Pour cela, le système de pistage est soumis à une évaluation simple consistant à évaluer chaque critère de manière binaire, à savoir 100% si le critère est rempli et 0% si le critère n'est pas rempli.

Toutefois, en cas de multiplicité de critères correspondant à un mélange complexe de contraintes obligatoires et recommandées et dans l'objectif d'améliorer le système de pistage, une telle évaluation est souvent insuffisante.

Il existe donc un besoin pour un procédé d'évaluation de la conformité d'un système de pistage à un ensemble d'exigences permettant d'obtenir une évaluation plus fine de la conformité du système de pistage.

Le document "Application of intent inference for surveillance and conformance monitoring to aid human cognition" de Pek Hui Foo et al. (10th International Conférence on information Fusion, 2007) décrit un système permettant, dans le domaine de la gestion du trafic aérien, la surveillance de la conformance en utilisant la logique floue. La présente description porte sur un procédé d'évaluation de la conformité d'un système de pistage selon la revendication 1.

Suivant des modes de réalisation particuliers, le procédé comprend une ou plusieurs des caractéristiques des revendications 2 à 8, prise(s) isolément ou suivant toutes les combinaisons techniquement.

La présente description se rapporte également à un produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en oeuvre d'un procédé tel que précédemment décrit lorsque le programme d'ordinateur est mis en oeuvre sur l'unité de traitement des données.

La présente description concerne aussi un support lisible d'informations mémorisant un programme d'ordinateur comprenant des instructions de programme, le programme d'ordinateur étant chargeable sur une unité de traitement de données et adapté pour entraîner la mise en oeuvre d'un procédé tel que précédemment décrit lorsque le programme d'ordinateur est mis en oeuvre sur l'unité de traitement des données.

D'autres caractéristiques et avantages de l'invention apparaîtront à la lecture de la description qui suit de modes de réalisation de l'invention, donnés à titre d'exemple uniquement et en référence aux dessins qui sont :

- figure 1, une vue schématique d'un exemple de système permettant la mise en oeuvre d'un procédé d'évaluation de la conformité d'un système de pistage à un ensemble d'exigences ;
- figure 2, une représentation schématique d'un exemple de fonction d'évaluation, et
- figure 3, un organigramme représentant la répartition des contraintes de la norme ESASSP par grandeur.

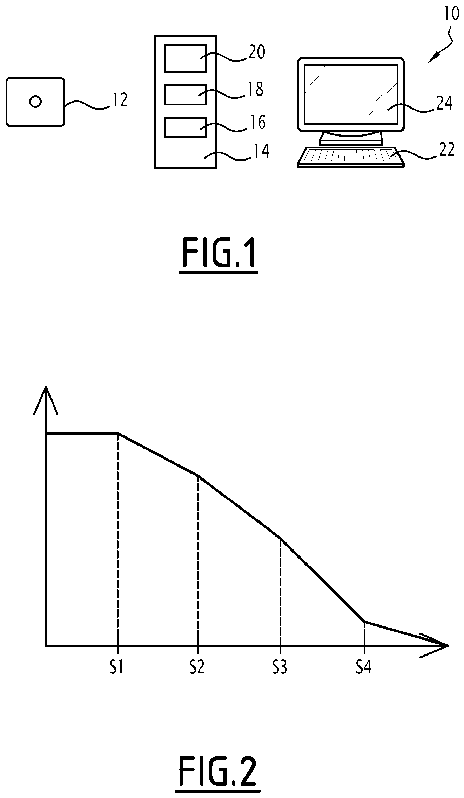

Un système 10 et un produit programme d'ordinateur 12 sont représentés à la figure 1. L'interaction du produit programme d'ordinateur 12 avec le système 10 permet de mettre en oeuvre un procédé d'évaluation de la conformité d'un système de pistage à un ensemble d'exigences.

Le système 10 est un ordinateur.

Plus généralement, le système 10 est un calculateur électronique propre à manipuler et/ou transformer des données représentées comme des quantités électroniques ou physiques dans des registres du système 10 et/ou des mémoires en d'autres données similaires correspondant à des données physiques dans des mémoires, des registres ou d'autres types de dispositifs d'affichage, de transmission ou de mémorisation.

Le système 10 comporte un processeur 14 comprenant une unité de traitement de données 16, des mémoires 18 et un lecteur 20 de support d'informations. Le système 10 comprend également un clavier 22 et une unité d'affichage 24.

Le produit programme d'ordinateur 12 comporte un support lisible d'informations.

Un support lisible d'informations est un support lisible par le système 10, usuellement par l'unité de traitement de données 14. Le support lisible d'informations est un médium adapté à mémoriser des instructions électroniques et capable d'être couplé à un bus d'un système informatique.

A titre d'exemple, le support lisible d'informations est un CD-ROM, un disque magnéto-optique, une mémoire ROM, une mémoire RAM, une mémoire EPROM, une mémoire EEPROM, une carte magnétique, une carte optique, une mémoire flash ou un disque SSD.

Sur le support lisible d'informations est mémorisé un programme d'ordinateur comprenant des instructions de programme.

Le programme d'ordinateur est chargeable sur l'unité de traitement de données 14 et est adapté pour entraîner la mise en oeuvre d'un procédé d'évaluation.

Le fonctionnement du système 10 en interaction avec le produit programme d'ordinateur 12 est décrit en référence à la figure 2 qui illustre schématiquement une partie d'un exemple de mise en oeuvre d'un procédé d'évaluation de la conformité d'un système de pistage à un ensemble d'exigences.

Au moins une exigence est une exigence obligatoire et au moins une exigence est une exigence recommandée.

Par définition, une exigence obligatoire est une exigence dont le non-respect entraîne la disqualification du système de pistage. Le terme d'exigence nécessaire est parfois utilisé pour désigner ce type d'exigence.

Par définition, une exigence recommandée est une exigence dont le non-respect n'entraîne pas la disqualification du système de pistage mais dont le respect est souhaitable. Le terme d'exigence souhaitable est parfois utilisé pour désigner ce type d'exigence.

Selon l'exemple proposé, le nombre d'exigences est supérieur ou égal à 20.

Pour la suite, il est supposé que chaque exigence fixe un seuil à respecter. Cela signifie que chaque exigence est formulable sous la forme d'une grandeur physique supérieure ou égale au seuil ou d'une grandeur physique inférieure ou égale au seuil.

A titre d'exemple, un tel ensemble d'exigences correspond aux exigences de la norme ESASSP qui est détaillée dans le document intitulé « EUROCONTROL Spécification for ATM Surveillance System Performance» (Volume 1) dont l'ISBN est 978-2-87497-022-1 et qui a été publié en mars 2012.

L'objectif de cette norme est d'assurer la qualité requise pour éviter des collisions. Cette qualité vise à une meilleure séparation entre les avions dans le trafic aérien (civil). Afin de pouvoir augmenter la capacité aérienne, il est primordial de disposer d'outils de pistage permettant d'assurer une séparation de plus en plus fine entre les avions. Deux normes ont été définies pour assurer deux séparations en distance : 5 NM et 3 NM.

La norme ESASSP définit 22 contraintes nommées de R1 à R22, c'est-à-dire 22 métriques spécifiques. Les 22 contraintes sont expliquées sommairement dans ce qui suit.

La première contrainte R1 concerne l'intervalle de mesure de la probabilité de mise à jour (dénommée en anglais « Measurement Interval for Probability of Update »). La première contrainte R1 se décompose en deux exigences : une exigence obligatoire et une exigence recommandée.

La deuxième contrainte R2 concerne la probabilité de mise à jour de la position horizontale (dénommée en anglais « Probability of update of horizontal position »). La deuxième contrainte R2 se décompose en deux exigences : une exigence obligatoire et une exigence recommandée.

La troisième contrainte R3 concerne le ratio de temps où l'avion n'a pas été pisté (dénommée en anglais « ratio of missed 3D position involved in long gaps »). La troisième contrainte R3 correspond à une exigence obligatoire.

La quatrième contrainte R4 concerne l'erreur quadratique en position horizontale (dénommée en anglais « Horizontal position RMS error »). L'erreur quadratique est souvent considérée comme une erreur principale représentative de la précision des mesures. La quatrième contrainte R4 se décompose en deux exigences : une exigence obligatoire et une exigence recommandée.

La cinquième contrainte R5 concerne un ratio en erreurs corrélées consécutives (dénommée en anglais « Consecutive correlated error ratio »). La cinquième contrainte R5 correspond à une exigence recommandée.

La sixième contrainte R6 concerne l'intervalle maximum de temps avec une proximité proche (dénommée en anglais « Max delta time in close proximity »). Une telle contrainte correspond au fait que, sur un radar, des pistes très proches qui ne sont pas rafraichies au même instant sont présentes. Dans la présentation au contrôleur aérien, il ne faut pas qu'il y ait deux pistes côte-à-côte qui aient des dates de mise à jour éloignées. Cela pourrait amener à des risques de collision, c'est-à-dire des problèmes de sécurité graves. La sixième contrainte R6 correspond à une exigence recommandée.

La septième contrainte R7 concerne la probabilité de mise à jour de la pression en altitude (dénommée en anglais « Probability of update of pressure altitude »). La septième contrainte R7 correspond à une exigence obligatoire.

La huitième contrainte R8 se rapporte à l'âge moyen des données transmises de la pression en altitude (dénommée en anglais « Average data age of forwarded pressure altitude »). La huitième contrainte R8 correspond à une exigence obligatoire.

La neuvième contrainte R9 se rapporte à l'âge maximal des données transmises de la pression en altitude (dénommée en anglais « Max data age of forwarded pressure altitude »). La neuvième contrainte R9 correspond à une exigence obligatoire.

La dixième contrainte R10 se rapporte au rapport de données transmises de la pression en altitude qui sont incorrectes (dénommée en anglais « Ratio of incorrect forwarded pressure altitude »). Il est à noter que la dixième contrainte R10 est une estimation de l'erreur correspondant à une erreur parasite. La dixième contrainte R10 correspond à une exigence obligatoire.

La onzième contrainte R11 concerne les erreurs non signées de la pression en altitude (dénommée en anglais « Pressure altitude unsigned error »). Il est à noter que la onzième contrainte R11 est une estimation de l'erreur de type erreur principale. La onzième contrainte R11 correspond à une exigence obligatoire.

La douzième contrainte R12 concerne le délai d'apparition des indicateurs d'urgence (dénommée en anglais « Delay of apparition of the emergency indicator / SPI report »). La douzième contrainte R12 correspond à une exigence obligatoire.

La treizième contrainte R13 se rapporte au délai de changement dans l'identification de l'avion (dénommée en anglais « Delay of change in Aircraft Id »). La treizième contrainte R13 correspond à une exigence obligatoire.

La quatorzième contrainte R14 concerne la probabilité de mise à jour avec une identification correcte (dénommée en anglais « Probability of update of aircraft identity with correct value »). La quatorzième contrainte R14 se décompose en deux exigences : une exigence obligatoire et une exigence recommandée.

La quinzième contrainte R15 se rapporte au rapport d'identification incorrecte de l'avion (dénommée en anglais « Ratio of Incorrect Aircraft identity »). Il est à noter que la quinzième contrainte R15 est une estimation de l'erreur de type erreur parasite La quinzième contrainte R15 correspond à une exigence obligatoire.

La seizième contrainte R16 concerne l'erreur quadratique du taux de descente ou de montée (dénommée en anglais « Rate of climb/descent RMS error »). Dans ce contexte, l'erreur estimée est du type erreur principale. La seizième contrainte R16 correspond à une exigence recommandée.

La dix-septième contrainte R17 concerne l'erreur quadratique de vitesse de poursuite (dénommée en anglais « Track velocity RMS error »). Dans ce contexte, l'erreur estimée est du type erreur principale. La dix-septième contrainte R17 correspond à une exigence recommandée.

La dix-huitième contrainte R18 concerne l'erreur quadratique de l'angle de vitesse de poursuite (dénommée en anglais « Track velocity angle RMS error »). Dans ce contexte, l'erreur estimée est du type erreur principale. La dix-huitième contrainte R18 correspond à une exigence recommandée.

La dix-neuvième contrainte R19 concerne la densité de fausses cibles non corrélées (dénommée en anglais « Density of uncorrelated false target reports »). Dans ce contexte, l'erreur estimée est du type erreur parasite. La dix-neuvième contrainte R19 correspond à une exigence recommandée.

La vingtième contrainte R20 concerne le ratio horaire de fausses pistes proches de vraies pistes (dénommée en anglais « Hourly rate of false tracks close to true tracks »). Dans ce contexte, l'erreur estimée est du type erreur corrélée. La vingtième contrainte R20 correspond à une exigence recommandée.

La vingt-et-unième contrainte R21 concerne la continuité (dénommée en anglais « Continuity »). La vingt-et-unième contrainte R21 correspond à une exigence recommandée.

La vingt-deuxième contrainte R22 concerne des investigations manuelles (analyses manuelles des résultats) qui doivent être menées lorsque les contraintes R2, R4, R12 ou R13 ne sont pas atteintes. La vingt-deuxième contrainte R22 se décline selon deux exigences : une exigence obligatoire et une exigence recommandée.

De manière synthétique, le tableau 1 suivant peut être établi, la présence d'une croix indiquant que la présence d'une exigence associée :

*Tableau 1 : Association pour chaque contrainte de sa dénomination en anglais, de l'unité associée ainsi que la présence d'une exigence obligatoire et d'une exigence recommandée*

| Contraintes | Nom anglais utilisé dans la norme | Unité | Exigence obligatoire | Exigence recommandée |
|---|---|---|---|---|
| R1 | Measurement Interval for Probability of Update | s | X | X |
| R2 | Probability of update of horizontal position | % | X | X |
| R3 | ratio of missed 3D position involved in long gaps | % | X | |
| R4 | Horizontal position RMS error | m | X | X |
| R5 | Consecutive correlated error ratio | % | | X |
| R6 | Max delta time in close proximity | s | | X |
| R7 | Probability of update of pressure altitude with correct value | % | X | |

(suite)

| Contraintes | Nom anglais utilisé dans la norme | Unité | Exigence obligatoire | Exigence recommandée |
|---|---|---|---|---|
| R8 | Average data age of forwarded pressure altitude | s | X | |
| R9 | Max data age of forwarded pressure altitude | s | X | |
| R10 | Ratio of incorrect forwarded pressure altitude | % | X | |
| R11 | Pressure altitude unsigned error | % | X | |
| R12 | Delay of apparition of the emergency indicator / SPI report | s | X | |
| R13 | Delay of change in Aircraft Id | s | X | |
| R14 | Probability of update of aircraft identity with correct value | % | X | X |
| R15 | Ratio of Incorrect Aircraft identity | % | X | |
| R16 | Rate of climb/descent RMS error | mis | | X |
| R17 | Track velocity RMS error | mis | | X |
| R18 | Track velocity angle RMS error | degrés | | X |
| R19 | Density of uncorrelated false target reports | nombre | | X |
| R20 | Number per hour of false tracks close to true tracks | nombre | | X |
| R21 | Continuity | % | | X |
| R22 | | | X | |

En résumé, la norme ESASSP est un ensemble de 14 exigences obligatoires et de 12 exigences recommandées, ce qui représente 26 exigences au total, ces 26 exigences étant estimées selon 22 métriques distinctes.

Dans la suite, il est supposé que le procédé est mis en oeuvre pour évaluer les 26 exigences précédentes.

Le procédé d'évaluation comporte une étape d'apprentissage supervisé, une étape d'application et une étape d'utilisation.

Lors de l'étape d'apprentissage supervisé, il est appris une fonction d'évaluation de la conformité à une exigence d'un système de pistage sous forme d'une fonction linéaire par morceaux.

Cela permet d'obtenir des fonctions d'évaluation apprises.

Chaque fonction d'évaluation associe à une grandeur physique une valeur. La valeur est représentative de la conformité à une exigence d'un système de pistage.

Dans le procédé illustré, chaque fonction d'évaluation est une fonction linéaire par morceaux.

Par définition, un morceau est une portion linéaire de la fonction d'évaluation. Le terme « tronçon » est parfois utilisé pour le terme morceau.

A titre d'exemple, une fonction définie par morceaux est une fonction comportant uniquement trois morceaux: un premier morceau pour lequel la valeur de la fonction est nulle lorsque la variable est inférieure à 0, un deuxième morceau pour lequel la valeur est la variable lorsque la variable est comprise entre 0 et 1 et un troisième morceau pour lequel la valeur de la fonction est égale à 1 lorsque la variable est supérieure à 1.

Pour le procédé décrit, chaque fonction d'évaluation comporte au moins trois morceaux.

De préférence, chaque fonction d'évaluation est une fonction linéaire comportant un nombre de morceaux inférieur ou égal à 6.

Dans l'exemple décrit, chaque fonction linéaire est une fonction linéaire à cinq morceaux, un premier morceau, un deuxième morceau, un troisième morceau, un quatrième morceau et un cinquième morceau.

Ainsi, chaque fonction linéaire comporte quatre seuils (un premier seuil, un deuxième seuil, un troisième seuil et un quatrième seuil) délimitant les morceaux. Plus précisément, le premier seuil est l'interface entre le premier morceau et le deuxième morceau, le deuxième seuil est l'interface entre le deuxième morceau et le troisième morceau, le troisième seuil est l'interface entre le troisième morceau et le quatrième morceau et le quatrième seuil est l'interface entre le quatrième morceau et le cinquième morceau.

Chaque seuil est une valeur d'une grandeur physique.

Par la suite, comme montré par la figure 2, il est supposé que les seuils sont strictement décroissants, c'est-à-dire que le premier seuil a une valeur strictement supérieure au deuxième seuil, que le deuxième seuil a une valeur strictement supérieure au troisième seuil et que le troisième seuil a une valeur strictement supérieure au quatrième seuil.

En outre, pour l'exemple illustré, le premier seuil correspond à une valeur maximale pour la fonction d'évaluation, le deuxième seuil correspond à 88% de la valeur maximale, le troisième seuil correspond à 35% de la valeur maximale et le quatrième seuil a une valeur nulle.

Plus précisément, pour une fonction d'évaluation donnant un score entre 0 et 100%, cela implique que :

- pour une grandeur physique supérieure au premier seuil, la valeur de la fonction d'évaluation est 100%;
- pour une grandeur physique comprise entre le premier seuil et le deuxième seuil, la valeur de la fonction d'évaluation diminue linéairement entre 100 et 88%;
- pour une grandeur physique comprise entre le deuxième seuil et le troisième seuil, la valeur de la fonction d'évaluation diminue linéairement entre 88 et 35%;
- pour une grandeur physique comprise entre le troisième seuil et le quatrième seuil, la valeur de la fonction d'évaluation diminue linéairement entre 35 et 0%, et
- pour une grandeur physique inférieure au quatrième seuil, la valeur de la fonction d'évaluation est égale à 0.

En variante, le premier seuil correspond à une valeur maximale pour la fonction d'évaluation, le deuxième seuil correspond à 80% de la valeur maximale, le troisième seuil correspond à 20% de la valeur maximale et le quatrième seuil à 0.

Plus précisément, pour une fonction d'évaluation donnant un score entre 0 et 100%, cela implique que :

- pour une grandeur physique supérieure au premier seuil, la valeur du la fonction d'évaluation est 100%;
- pour une grandeur physique comprise entre le premier seuil et le deuxième seuil, la valeur de la fonction d'évaluation diminue linéairement entre 100 et 80%;
- pour une grandeur physique comprise entre le deuxième seuil et le troisième seuil, la valeur de la fonction d'évaluation diminue linéairement entre 80 et 20%;
- pour une grandeur physique comprise entre le troisième seuil et le quatrième seuil, la valeur de la fonction d'évaluation diminue linéairement entre 20 et 0%, et
- pour une grandeur physique inférieure au quatrième seuil, la valeur de la fonction d'évaluation est égale à 0.

Le choix des seuils dépend des cas.

Toutefois, pour faciliter l'interprétation des fonctions d'évaluation, il est préférable qu'un des seuils soit le seuil fixé par l'exigence associée à la fonction d'évaluation.

Dans l'exemple illustré, le deuxième seuil est le seuil fixé par l'exigence.

Ainsi, dès que la valeur de la fonction d'évaluation pour la grandeur physique est supérieure au deuxième seuil, cela implique que l'exigence est remplie.

La fonction d'évaluation précédemment présentée s'applique pour des exigences obligatoires ou recommandées.

Pour illustrer cette idée, des exemples concrets sont détaillés dans ce qui suit en référence aux exigences de la norme ESASSP.

Pour le premier cas d'une exigence recommandée pour lequel un pourcentage est à maximiser avec un seuil recommandé REC fourni par la norme ESASSP, la fonction d'évaluation est une fonction linéaire à cinq morceaux comportant quatre seuils S1, S2, S3 et S4 déterminés par les formules suivantes :

- le premier seuil S1 est tel que $S1 = 100 - (100 - REC) * 0,35$ ;
- le deuxième seuil S2 est tel que $S2 = REC$ ;
- le quatrième seuil S4 est tel que $S4 = 100 - (100 - REC) * 2$, et
- le troisième seuil S3 est tel que $S3 = (S2 + S4)/2$.

Les résultats d'application pratique aux exigences correspondantes de la norme ESASSP sont résumés dans le tableau 2 qui suit :

*Tableau 2 : Fonction d'évaluation des exigences recommandées de type pourcentage à maximiser*

| Contraintes | S1 | S2 | S3 | S4 |
|---|---|---|---|---|
| R2 | 99 | 99 | 98,5 | 98 |
| R14 | 99,3 | 98 | 97 | 96 |

Pour le deuxième cas d'une exigence recommandée pour lequel la valeur est à minimiser alors que les valeurs de la métrique sont relativement grandes (typiquement quelques centaines dans l'unité) avec un seuil recommandé REC fourni par la norme ESASSP, la fonction d'évaluation est une fonction linéaire à cinq morceaux comportant quatre seuils S1, S2, S3 et S4 déterminés par les formules suivantes :

- le premier seuil S1 est tel que S1 = REC ∗ 0,35 ;
- le deuxième seuil S2 est tel que S2 = REC ;
- le quatrième seuil S4 est tel que S4 = REC ∗ 1,43, et
- le troisième seuil S3 est tel que S3 = (S2 + S4)/2.

Les résultats d'application pratique aux exigences correspondantes de la norme ESASSP sont résumés dans le tableau 3 qui suit :

*Tableau 3 : Fonction d'évaluation des exigences recommandées de type valeur à minimiser avec des valeurs relativement grandes*

| Contraintes | S1 | S2 | S3 | S4 |
|---|---|---|---|---|
| R4 | 122,5 | 350 | 425,25 | 500,5 |
| R17 | 1 | 4 | 4,86 | 5,72 |
| R18 | 5 | 10 | 12,15 | 14,3 |
| R19 | 3,5 | 10 | 12,15 | 14,3 |

Pour le troisième cas d'une exigence recommandée pour lequel une valeur est à minimiser alors que les valeurs de la métrique sont relativement petites (typiquement 0,1) avec un seuil recommandée REC fourni par la norme ESASSP, la fonction d'évaluation est une fonction linéaire à cinq morceaux et comportant quatre seuils S1, S2, S3 et S4 déterminés par les formules suivantes :

- le premier seuil S1 est tel que S1 = REC ∗ 0,35 ;
- le deuxième seuil S2 est tel que S2 = REC ;
- le quatrième seuil S4 est tel que S4 = REC ∗ 2, et
- le troisième seuil S3 est tel que S3 = (S2 + S4)/2.

Les résultats d'application pratique aux exigences correspondantes de la norme ESASSP sont résumés dans le tableau 4 qui suit :

*Tableau 4 : Fonction d'évaluation des exigences recommandées de type valeur à minimiser avec des valeurs relativement petites*

| Contraintes | S1 | S2 | S3 | S4 |
|---|---|---|---|---|
| R5 | 0,0105 | 0,03 | 0,045 | 0,06 |
| R6 | 0,105 | 0,3 | 0,45 | 0,6 |
| R16 | 0,889 | 2,54 | 3,81 | 5,08 |

Pour le quatrième cas d'une exigence obligatoire pour lequel un pourcentage est à maximiser avec un seuil obligatoire MAND fourni par la norme ESASSP, la fonction d'évaluation est une fonction linéaire à cinq morceaux et comportant quatre seuils S1, S2, S3 et S4 déterminés par les formules suivantes :

- le premier seuil S1 est tel que S1 = 100 - (100 - MAND) ∗ 0,68 ;
- le deuxième seuil S2 est tel que S2 = MAND ;
- le quatrième seuil S4 est tel que S4 = 100 - (100 - MAND) ∗ 1,02, et
- le troisième seuil S3 est tel que S3 = (S2 + S4)/2.

Les résultats d'application pratique aux exigences correspondantes de la norme ESASSP sont résumés dans le tableau 5 qui suit :

*Tableau 5 : Fonction d'évaluation des exigences recommandées de type pourcentage à maximiser*

| Contraintes | S1 | S2 | S3 | S4 |
|---|---|---|---|---|
| R2 | 97,96 | 97 | 96,97 | 96,94 |
| R7 | 97,28 | 96 | 95,96 | 95,92 |
| R11 | 99,932 | 99,9 | 99,899 | 99,838 |
| R14 | 98,64 | 98 | 97,98 | 97,96 |

Pour le sixième cas d'une exigence obligatoire pour lequel une valeur est à minimiser avec un seuil recommandé MAND fourni par la norme ESASSP, la fonction d'évaluation est une fonction linéaire à cinq morceaux et comportant quatre seuils S1, S2, S3 et S4 déterminés par les formules suivantes :

- le premier seuil S1 est tel que S1 = MAND ∗ 0,96 ;
- le deuxième seuil S2 est tel que S2 = MAND ;
- le quatrième seuil S4 est tel que S4 = REC ∗ 1,02, et
- le troisième seuil S3 est tel que S3 = (S2 + S4)/2.

Les résultats d'application pratique aux exigences correspondantes de la norme ESASSP sont résumés dans le tableau 6 qui suit :

*Tableau 6 : Fonction d'évaluation des exigences obligatoires de type valeur à minimiser*

| Contraintes | S1 | S2 | S3 | S4 |
|---|---|---|---|---|
| R3 | 0,48 | 0,5 | 0,505 | 0,51 |
| R4 | 480 | 500 | 505 | 510 |
| R8 | 3,84 | 4 | 4,04 | 4,08 |
| R9 | 15,36 | 16 | 16,16 | 16,32 |
| R10 | 0,096 | 0,1 | 0,101 | 0,102 |
| R12 | 11,52 | 12 | 12,12 | 12,24 |
| R13 | 23,04 | 24 | 24,24 | 24,48 |
| R15 | 0,096 | 0,1 | 0,101 | 0,102 |

A l'issue de l'étape d'apprentissage, il est ainsi obtenu des fonctions d'évaluation apprises pour chaque exigence.

Lors de l'étape d'application, il est appliqué les fonctions d'évaluation apprises au système de pistage à évaluer.

Cela permet d'obtenir pour chaque fonction d'évaluation une valeur d'évaluation propre au système de pistage à évaluer.

L'étape d'application est notamment mise en oeuvre sur des données fournies par le système de pistage.

A l'issue de l'étape d'application, il est ainsi obtenu des valeurs d'évaluation.

Lors de l'étape d'utilisation, il est utilisé des valeurs d'évaluation pour obtenir un score global évaluant la conformité du système de pistage à l'ensemble des exigences.

Le score global dépend des valeurs d'évaluation selon une fonction plus ou moins complexe.

Dans un mode de réalisation simple, le score global est une simple addition des valeurs d'évaluation.

Dans un mode de réalisation préférée, le procédé comporte le calcul d'un score global pour chaque type d'exigence par agrégation des fonctions d'évaluation de toutes les exigences du type considéré, le score global évaluant la conformité du système de pistage à l'ensemble des exigences étant obtenu par agrégation des scores globaux par type d'exigence. Dans un tel mode de réalisation, les valeurs d'évaluation correspondant à des fonctions d'évaluation associées à une exigence obligatoire (premier type d'exigence) sont tout d'abord agrégées pour obtenir un score $U_{Mand}(x)$ (représentant le niveau de satisfaction global de toutes les exigences obligatoires), ensuite les valeurs d'évaluation correspondant à des fonctions d'évaluation associées à une exigence recommandée (deuxième type d'exigence) sont agrégées pour obtenir un score $U_{Rec}(x)$ (représentant le niveau de satisfaction global des toutes les exigences recommandées), et enfin les deux scores $U_{Mand}(x)$ et $U_{Rec}(x)$ sont agrégés pour obtenir le score global $U(x)$.

Le score global $U(x)$ est une pondération appliquant un premier poids pour $U_{Mand}(x)$, un second poids pour $U_{Rec}(x)$, un troisième poids pour le plus petit score entre $U_{Mand}(x)$ et $U_{Rec}(x)$, et enfin un quatrième poids pour le plus grand score entre $U_{Mand}(x)$ et $U_{Rec}(x)$.

Ces quatre poids sont dans le cas général distincts. Par exemple, le ratio entre le premier poids et le deuxième poids est supérieur ou égal à 3.

De même, $U_{Mand}(x)$ s'obtient par une pondération des fonctions d'évaluation associées à une exigence obligatoire et des différents minimums et maximums entre les sous-ensembles de ces fonctions.

$U_{Rec}(x)$ s'obtient par une pondération des fonctions d'évaluation associées à une exigence recommandée et des différents minimums et maximums entre les sous-ensembles de ces fonctions.

Selon un exemple particulier, le score global est donné par la fonction suivante :

$$U(x) = 0{,}805 * U_{MAND}(x) + 0{,}105 * U_{REC}(x) + 0{,}11 * \min\big(U_{MAND}(x), U_{REC}(x)\big)$$
$$U(x) U_{Mand}(x) U_{REC}(x)$$

Le score $U_{Mand}(x)$ peut s'obtenir de manière hiérarchique à partir de calculs de scores intermédiaires de la façon suivante :

- Temps : $U_{Temps\,;\,Mand}(x) = 0.25 * U_{R8\,;\,Mand}(x) + 0.25 * U_{R9\,;\,Mand}(x) + 0.25 * U_{R12;\,Mand}(x) + 0.25 * U_{R13\,;\,Mand}(x)$
- Disponibilité : $U_{Dispo\,;\,Mand}(x) = 0.225 * U_{R2\,;\,Mand}(x) + 0.225 * U_{R7\,;\,Mand}(x) + 0.11 * \max(U_{R2\,;\,Mand}(x), U_{R7\,;\,Mand}(x)) + 0.22 * \min(U_{R2\,;\,Mand}(x), U_{R14\,;\,Mand}(x)) + 0.22 * \min(U_{R7\,;\,Mand}(x), U_{R14\,;\,Mand}(x))$
- Erreur Fausse : $U_{Faux\,;\,Mand}(x) = 0.5 * U_{R10\,;\,Mand}(x) + 0.5 * U_{R15\,;\,Mand}(x)$
- Erreur coeur (précision) : $U_{Coeur\,;\,Mand}(x) = 0.5 * U_{R4\,;\,Mand}(x) + 0.5 * U_{R11\,;\,Mand}(x)$
- Erreur d'intégrité : $U_{Integ\,;\,Mand}(x) = U_{Coeur\,;\,Mand}(x)/3 + 2 * U_{Faux\,;\,Mand}(x)/3$
- Score global sur les exigences obligatoires : $U_{Mand}(x) = 0.2 * U_{Integ\,;\,Mand}(x) + 0.4 * U_{Dispo\,;\,Mand}(x) + 0.2 * \min(U_{R3\,;\,Mand}(x), U_{Temps\,;\,Mand}(x)) + 0.1 * \min(U_{R3\,;\,Mand}(x), U_{Integ\,;\,Mand}(x)) + 0.1 * \min(U_{R3\,;\,Mand}(x), U_{Dispo\,;\,Mand}(x))$

Le score $U_{Rec}(x)$ peut s'obtenir de manière hiérarchique de la manière suivante, à partir de calculs de scores intermédiaires :

- Erreur cœur (précision) : $U_{Coeur\,;\,Rec}(x) = 0.13 * U_{R4;Rec}(x) + 0.205 * U_{R16\,;\,Rec}(x) + 0.07 * U_{R17\,;\,Rec}(x) + 0.465 * U_{R18\,;\,Rec}(x) + 0.13 * \max(U_{R17\,;\,Rec}(x), U_{R18\,;\,Rec}(x))$
- Erreur corrélée : $U_{Corr\,;\,Rec}(x) = 0.25 * U_{R5\,;\,Rec}(x) + 0.75 * U_{R20\,;\,Rec}(x)$
- Erreur d'intégrité : $U_{Int\,;\,Rec}(x) = 0.05 * U_{Corr\,;\,Rec}(x) + 0.25 * U_{Coeur\,;\,Rec}(x) + 0.55 * U_{R19\,;\,Rec}(x) + 0.05 * \min(U_{Corr\,;\,Rec}(x), U_{Coeur\,;\,Rec}(x)) + 0.05 * \min(U_{Corr\,;\,Rec}(x), U_{R19;\,Rec}(x)) + 0.05 * \min(U_{Coeur\,;\,Rec}(x), U_{R19\,;\,Rec}(x))$
- Disponibilité : $U_{Dispo\,;\,Rec}(x) = U_{R2\,;\,Rec}(x)/3 + 2 * U_{R14\,;\,Rec}(x)/3$
- Score global sur les exigences recommendées : $U_{Rec}(x) = 0.22 * U_{Dispo\,;\,Rec}(x) + 0.07 * U_{R6\,;\,Rec}(x) + 0.57 * U_{Int\,;\,Rec}(x) + 0.14 * \max(U_{Dispo\,;\,Rec}(x), U_{Int\,;\,Rec}(x))$

Dans un mode de réalisation plus élaborée, le score global est une pondération de chaque fonction d'évaluation, chaque coefficient de pondération étant obtenu par un apprentissage supervisé.

Les coefficients de pondération dans chaque calcul de scores intermédiaires sont également obtenus par apprentissage supervisé.

A l'issue de l'étape d'utilisation, il est obtenu un score global pour le système de pistage, ce score global reflétant le respect des exigences par le système de pistage.

Le procédé d'évaluation permet ainsi d'obtenir une évaluation plus fine de la conformité du système de pistage qu'un procédé d'évaluation binaire présenté dans l'introduction de la demande.

En effet, chaque fonction d'évaluation est différenciée au sens où elle permet de rendre compte de l'écart de la grandeur par rapport à la grandeur souhaitée par l'exigence obligatoire et recommandée.

Néanmoins, la fonction d'évaluation reste une fonction relativement simple permettant la gestion d'un nombre important de critères (ici un nombre supérieur ou égal à 20).

L'obtention d'un tel score global permet une utilisation pour de multiples applications.

Cela permet de faciliter la certification d'un système de pistage.

En particulier, il devient possible d'évaluer la performance d'un système de pistage en cours de conception.

La comparaison de deux systèmes de pistage est aussi facilitée puisque le score global est plus fin. Une telle propriété est avantageusement exploitée dans un procédé de conception d'un système de pistage pour lequel la fonction d'optimisation consisterait à maximiser le score global. La propriété est aussi utilisable par un concepteur de système de pistage pour déterminer les éléments à améliorer dans le système de pistage.

Le score global permet également de détecter les faiblesses d'un système de pistage existant et de déterminer comment l'ajout d'un ou plusieurs capteur(s) permet d'améliorer le système de pistage.

Pour faciliter encore plus la tâche d'un concepteur de système de pistage, le procédé comporte, en outre, une étape d'apprentissage supervisé de fonctions d'agrégation des valeurs d'évaluation, la fonction d'agrégation évaluant la conformité du système de pistage à une partie des exigences de l'ensemble d'exigences correspondant à une grandeur particulière, l'étape d'utilisation comprenant l'utilisation des valeurs d'évaluation et des fonctions d'agrégation apprises pour obtenir une valeur pour chaque partie des exigences de l'ensemble d'exigences correspondant à une grandeur particulière et l'utilisation des valeurs obtenues lors de l'utilisation ainsi que des fonctions d'agrégation pour obtenir le score global.

Autrement formulé, cela revient à une étape de regroupement de certaines valeurs d'évaluation pour obtenir des scores évaluant la conformité du système de pistage à une partie des exigences de l'ensemble d'exigences correspondant à une grandeur particulière.

Une grandeur est, par exemple, la disponibilité, la continuité, l'intégrité, le temps ou la cohérence.

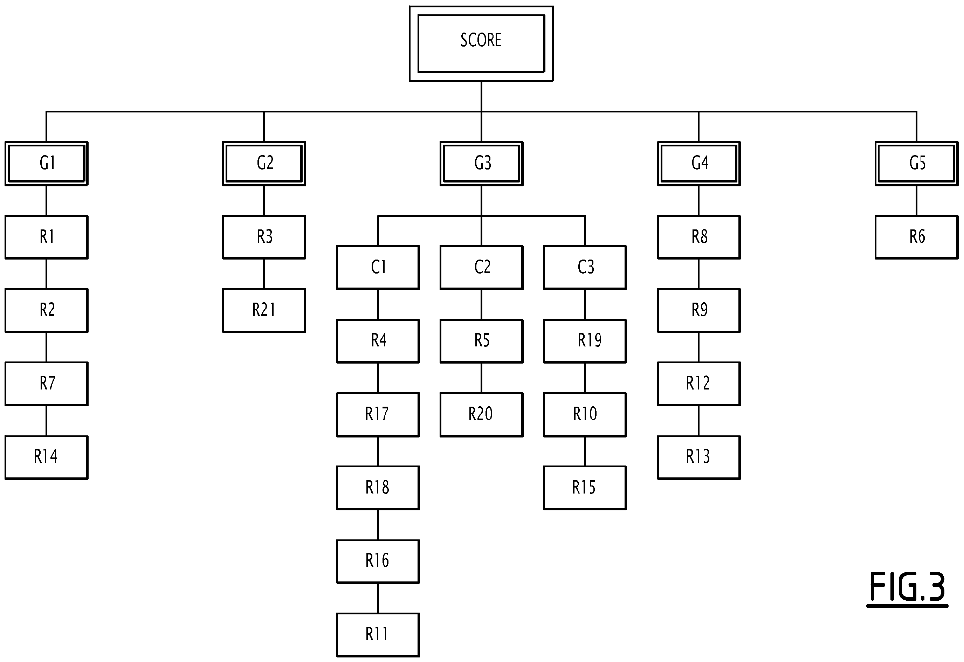

Comme cela est illustré sur la figure 3, dans le cas de la norme ESASSP, l'ensemble des contraintes R1 à R22 se répartisse en cinq grandeurs G1, G2, G3, G4 et G5.

La première grandeur G1 appelée « disponibilité » regroupe les exigences des contraintes R1, R2, R7 et R14.

La deuxième grandeur G2 appelée « continuité » regroupe les exigences des contraintes R1 et R21.

La troisième grandeur G3 appelée « intégrité » regroupe trois classes C1, C2 et C3 qui sont les classes d'évaluation de l'erreur. Les trois classes sont respectivement les erreurs principales, les erreurs corrélées et les erreurs parasites. La première classe C1 correspondant à une évaluation des erreurs principales regroupe les exigences des contraintes R4, R11, R16, R17 et R18. La deuxième classe C2 correspondant à une évaluation des erreurs corrélées regroupe les exigences des contraintes R5 et R20. La troisième classe C3 correspondant à une évaluation des erreurs parasites regroupe les exigences des contraintes R10, R15 et R19.

La quatrième grandeur G4 appelée « temps » regroupe les exigences des contraintes R8, R9, R12 et R13.

La cinquième grandeur G5 appelée « cohérence » regroupe uniquement l'exigence recommandée de la sixième contrainte R6.

Le procédé d'évaluation proposé implique que les grandeurs physiques en entrée soient un bon reflet de la réalité « terrain ».

Ainsi, une amélioration des grandeurs physiques en entrée résulte en une amélioration de la pertinence du score global.

Aussi, de préférence, le système de pistage fournit des estimations de mesures à partir de données antérieures issues de plusieurs capteurs, chaque fonction d'évaluation prenant en entrée au moins une desdites mesures estimées.

Selon un mode de réalisation préféré, chaque mesure estimée est entachée d'une erreur, l'erreur étant estimée en utilisant des données postérieures issues des mêmes capteurs comme référence, chaque fonction d'évaluation prenant également en entrée au moins une erreur desdites mesures estimées.

A titre d'exemple, cela s'applique notamment pour l'estimation de la trajectoire d'un aéronef par un système de pistage.

Il est ainsi proposé un procédé de détermination de l'erreur sur l'estimation de la trajectoire d'un aéronef par le système de pistage à évaluer.

Le procédé comportant une étape d'obtention, une étape de prédiction, une étape de collection, une étape de reconstruction et une étape de détermination.

Lors de l'étape d'obtention, il est obtenu des données issues de plusieurs capteurs entre un premier instant t1 et un deuxième instant t2.

Les capteurs sont, par exemple, un radar, un ADS, un WAM.

L'ADS (sigle pour « Automatic Dependent Surveillance » signifiant littéralement « surveillance de dépendance automatique ») aussi appelé ADS-B (sigle pour « Automatic Dependent Surveillance-Broadcast » signifiant littéralement « surveillance de dépendance automatique-multidiffusion ») est un système de surveillance coopératif pour le contrôle du trafic aérien et d'autres applications connexes. Un avion équipé de l'ADS-B détermine sa position par un système de positionnement par satellite (GPS) et envoie périodiquement cette position et d'autres informations aux stations au sol.

Un WAM (sigle pour « Wide Area Multilateration » signifiant littéralement « Multilatéralisation à zone étendue ») est une technologie de surveillance d'avions basée sur le principe de la différence de temps d'arrivée qui est utilisée dans un aéroport. Un WAM utilise les données de plusieurs capteurs pour obtenir la localisation de l'avion. Par exemple, le WAM collecte les données provenant de plusieurs antennes au sol pour appliquer des calculs mathématiques permettant d'obtenir la position de l'avion.

Un RADAR (RAdio Détection And Ranging en anglais) permet de détecter la présence d'avions dans le ciel et de déterminer leur position. Le RADAR émet des impulsions électromagnétiques dans le ciel, et la détection et la localisation d'un avion sont obtenues par l'analyse de l'onde réfléchie par l'avion et retransmise dans la direction du RADAR.

Dans l'exemple décrit, l'intervalle de temps entre le premier instant t1 et le deuxième instant t2 est inférieur ou égal à 30 minutes.

L'étape d'obtention permet ainsi d'obtenir de multiples données entre le premier instant t1 et le deuxième instant t2.

Lors de l'étape de prédiction, le système de pistage prédit la trajectoire de l'aéronef à partir des données obtenues entre le premier instant t1 et le deuxième instant t2.

Il est ainsi obtenu une trajectoire prédite pour l'avion.

Lors de l'étape de collection, il est collecté les données issues des capteurs entre un instant initial t0 et le premier instant, ainsi qu'entre le deuxième instant t2 et un troisième instant t3.

L'instant initial t0 est antérieur au premier instant t1.

Le troisième instant t3 est ultérieur au premier instant t1 et au deuxième instant t2.

Le rapport R entre l'intervalle de temps entre le deuxième instant t2 et le troisième instant t3 et l'intervalle de temps entre le premier instant t1 et le deuxième instant t2 est supérieur ou égal à 0,5.

Le rapport R' entre l'intervalle de temps entre l'instant initial t0 et le premier instant t1 et l'intervalle de temps entre le premier instant t1 et le deuxième instant t2 est supérieur ou égal à 0,5.

Par exemple, l'intervalle de temps entre le deuxième instant t2 et le troisième instant t3 est supérieur ou égal à 15 minutes. Il en résulte que le rapport R est, dans l'exemple décrit, supérieur à 0,5.

De même, l'intervalle de temps entre l'instant initial t0 et le premier instant t1 est supérieur ou égal à 15 minutes. Il en résulte que le rapport R' est, dans l'exemple décrit, supérieur à 0,5.

Lors de l'étape de reconstruction, la trajectoire effective de l'aéronef est reconstruite à partir des données collectées et des données obtenues.

La reconstruction concerne plus spécifiquement la trajectoire de l'aéronef entre le premier instant t1 et le deuxième instant t2.

L'étape de reconstruction comporte, par exemple, une interpolation des données par une spline cubique et un ajustement par une technique des moindres carrés.

Lors de l'étape de détermination, l'erreur est obtenue par comparaison de la trajectoire prédite et de la trajectoire reconstruite.

Pour déterminer l'erreur entre la trajectoire reconstruite et la trajectoire prédite par le système de pistage, les étapes suivantes sont effectuées :

- Interpolation de la trajectoire de référence au temps de la mise à jour de la piste par le système de pistage. Cette interpolation signifie que plusieurs grandeurs physiques caractérisant la piste sont interpolées, les principales étant la position horizontale, la position verticale, le vecteur vitesse horizontal, la vitesse verticale,
- L'erreur est calculée selon un axe donné (position, vitesse, etc...) en effectuant la différence entre la grandeur interpolée de la trajectoire de référence et la grandeur de la trajectoire prédite, et
- Pour l'ensemble d'une trajectoire, il est calculé la valeur RMS (Root Mean Square) et la valeur MAX en utilisant l'ensemble des erreurs calculées pour une grandeur physique donnée.

Un tel procédé permet d'obtenir une erreur fiable pour la trajectoire de l'aéronef.

Le procédé peut être mis en oeuvre à distance par traitement des données à l'aide d'un système tel que décrit en référence à la figure 1.

Selon un autre mode de réalisation, le procédé est mis en oeuvre par un contrôleur situé dans le système de pistage.

Cela permet, par exemple, de vérifier le fonctionnement du système de pistage avec un temps de retard pour alerter si une erreur trop grande est obtenue par le procédé de détermination.

L'invention concerne toute combinaison techniquement possible des modes de réalisation précédemment décrits.

**Revendications**

1. Procédé d'évaluation de la conformité d'un système de pistage à un ensemble d'exigences, au moins une exigence étant une exigence obligatoire et au moins une exigence étant une exigence recommandée, chaque exigence imposant qu'une grandeur physique est supérieure ou égale à un seuil ou qu'une grandeur physique est inférieure ou égale à un seuil, le procédé d'évaluation étant mis en oeuvre par ordinateur, le procédé d'évaluation comportant au moins les étapes suivantes :

   - apprentissage supervisé de fonction d'évaluation de la conformité à une exigence sous forme d'une fonction linéaire par morceaux, la fonction linéaire comportant au moins trois morceaux, de préférence moins de six morceaux, pour obtenir des fonctions d'évaluation apprises, chaque fonction d'évaluation associant à une grandeur physique une valeur,
   - application des fonctions d'évaluation apprises au système de pistage pour obtenir des valeurs d'évaluation, et
   - utilisation des valeurs d'évaluation pour obtenir un score global évaluant la conformité du système de pistage à l'ensemble des exigences.

   le procédé comportant le calcul d'un score global pour chaque type d'exigence par agrégation des fonctions d'évaluation de toutes les exigences du type considéré, le score global évaluant la conformité du système de pistage à l'ensemble des exigences étant obtenu par agrégation des scores globaux par type d'exigence
   ou
   le procédé comportant, en outre :

   - une étape d'apprentissage supervisé de fonctions d'agrégation des valeurs d'évaluation, la fonction d'agrégation évaluant la conformité du système de pistage à une partie des exigences de l'ensemble d'exigences correspondant à une grandeur particulière, et
   - une étape d'utilisation comprenant l'utilisation des valeurs d'évaluation et des fonctions d'agrégation apprises pour obtenir une valeur pour chaque partie des exigences de l'ensemble d'exigences correspondant à une grandeur particulière et l'utilisation des valeurs obtenues lors de l'utilisation ainsi que des fonctions d'agrégation pour obtenir le score global.

2. Procédé selon la revendication 1, dans lequel, à l'étape d'apprentissage supervisé, chaque fonction linéaire est une fonction linéaire à cinq morceaux.

3. Procédé selon la revendication 2, dans lequel une exigence fixe un seuil à respecter, au moins une des propriétés suivantes est vérifiée :

   - chaque fonction linéaire comporte une pluralité de seuils, un des seuils étant le seuil fixé par l'exigence,
   - chaque fonction linéaire comporte une pluralité de seuils, le seuil présentant la deuxième valeur la plus faible par la fonction d'évaluation étant le seuil fixé par l'exigence,
   - chaque fonction linéaire comporte quatre seuils, le premier seuil correspondant à une valeur maximale par la fonction d'évaluation, le deuxième seuil correspondant à 88% de la valeur maximale, le troisième seuil correspondant à 35% de la valeur maximale et le quatrième seuil à 0, et
   - chaque fonction linéaire comporte quatre seuils, le premier seuil correspondant à une valeur maximale par la fonction d'évaluation, le deuxième seuil correspondant à 80% de la valeur maximale, le troisième seuil correspondant à 20% de la valeur maximale et le quatrième seuil à 0.

4. Procédé selon l'une quelconque des revendications 1 à 3, dans lequel chaque fonction linéaire comporte une pluralité de seuils et une exigence fixe un seuil à respecter, au moins une des propriétés suivantes étant vérifiée :

   - chaque seuil est une fonction linéaire du seuil fixé par l'exigence, et
   - un des seuils est la moyenne arithmétique de deux autres seuils.

5. Procédé selon l'une quelconque des revendications 1 à 4, dans lequel le nombre d'exigences est supérieur ou égal à 20.

6. Procédé selon l'une quelconque des revendications 1 à 5, dans lequel le système de pistage fournit des estimations de mesures à partir de données antérieures issues de plusieurs capteurs, chaque fonction d'évaluation prenant en entrée au moins une desdites mesures estimées.

**7.** Procédé selon la revendication 6, dans lequel chaque mesure estimée est entachée d'une erreur, chaque fonction d'évaluation prenant également en compte ladite erreur.

**8.** Procédé selon l'une quelconque des revendications 1 à 7, dans lequel le procédé comporte, en outre, une étape de regroupement de certaines valeurs d'évaluation pour obtenir des scores évaluant la conformité du système de pistage à une partie des exigences de l'ensemble d'exigences correspondant à une grandeur particulière, une grandeur étant, par exemple, la disponibilité, la continuité, l'intégrité, le temps ou la cohérence.

**9.** Produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en oeuvre d'un procédé selon l'une quelconque des revendications 1 à 8 lorsque le programme d'ordinateur est mis en oeuvre sur l'unité de traitement des données.

**10.** Support lisible d'informations mémorisant un programme d'ordinateur comprenant des instructions de programme, le programme d'ordinateur étant chargeable sur une unité de traitement de données et adapté pour entraîner la mise en oeuvre d'un procédé selon l'une quelconque des revendications 1 à 8 lorsque le programme d'ordinateur est mis en oeuvre sur l'unité de traitement des données.

**Patentansprüche**

**1.** Verfahren zur Bewertung der Konformität eines Verfolgungssystems mit einem Satz von Anforderungen, wobei mindestens eine Anforderung eine obligatorische Anforderung und mindestens eine Anforderung eine empfohlene Anforderung ist, wobei jede Anforderung vorschreibt, dass eine physikalische Größe größer als oder gleich wie ein Schwellenwert ist oder dass eine physikalische Größe kleiner als oder gleich wie ein Schwellenwert ist, wobei das Bewertungsverfahren computergestützt durchgeführt wird, das Bewertungsverfahren umfassend mindestens die folgenden Schritte:

- überwachtes Lernen einer Funktion zur Bewertung der Konformität mit einer Anforderung in Form einer teilweise linearen Funktion, die lineare Funktion umfassend mindestens drei Teile, vorzugsweise weniger als sechs Teile, um gelernte Bewertungsfunktionen zu erlangen, wobei jede Bewertungsfunktion eine physikalische Größe mit einem Wert assoziiert,
- Anwenden erlernter Bewertungsfunktionen auf das Verfolgungssystem, um Bewertungswerte zu erlangen, und
- Verwenden der Bewertungswerte, um eine Gesamtpunktzahl zu erlangen, die die Übereinstimmung des Verfolgungssystems mit dem Satz von Anforderungen bewertet,
das Verfahren umfassend das Berechnen einer Gesamtpunktzahl für jeden Anforderungstyp durch Aggregation der Bewertungsfunktionen für alle Anforderungen des betreffenden Typs, wobei die Gesamtpunktzahl, die die Konformität des Verfolgungssystems mit dem Satz von Anforderungen bewertet, durch Aggregation der Gesamtpunktzahlen pro Anforderungstyp erlangt wird,
oder
wobei das Verfahren ferner Folgendes umfasst:

- einen Schritt eines überwachten Lernens von Aggregationsfunktionen für die Bewertungswerte, wobei die Aggregationsfunktion die Konformität des Verfolgungssystems mit einem Teil der Anforderungen aus dem Satz von Anforderungen bewertet, die einer bestimmten Größe entsprechen, und
- einen Verwendungsschritt, umfassend die Verwendung der gelernten Bewertungswerte und Aggregationsfunktionen, um einen Wert für jeden Teil der Anforderungen des Satzes von Anforderungen zu erlangen, der einer bestimmten Größe entspricht, und die Verwendung der bei der Verwendung erlangten Werte sowie der Aggregationsfunktionen, um die Gesamtpunktzahl zu erlangen.

**2.** Verfahren nach Anspruch 1, wobei in dem Schritt des überwachten Lernens jede lineare Funktion eine fünfteilige lineare Funktion ist.

**3.** Verfahren nach Anspruch 2, wobei eine Anforderung einen einzuhaltenden Schwellenwert festlegt, wobei mindestens eine der folgenden Eigenschaften überprüft wird:

- jede lineare Funktion umfasst eine Vielzahl von Schwellenwerten, wobei einer der Schwellenwerte der durch die Anforderung festgelegte Schwellenwert ist,

- jede lineare Funktion umfasst eine Vielzahl von Schwellenwerten, wobei der Schwellenwert, der durch die Bewertungsfunktion den zweitniedrigsten Wert aufweist, der durch die Anforderung festgelegte Schwellenwert ist,

- jede lineare Funktion umfasst vier Schwellenwerte, wobei der erste Schwellenwert einem Maximalwert durch die Bewertungsfunktion entspricht, der zweite Schwellenwert 88 % des Maximalwerts entspricht, der dritte Schwellenwert 35 % des Maximalwerts entspricht und der vierte Schwellenwert 0 ist, und

- jede lineare Funktion umfasst vier Schwellenwerte, wobei der erste Schwellenwert einem Maximalwert durch die Bewertungsfunktion entspricht, der zweite Schwellenwert 80 % des Maximalwerts entspricht, der dritte Schwellenwert 20 % des Maximalwerts entspricht und der vierte Schwellenwert 0 ist.

4. Verfahren nach einem der Ansprüche 1 bis 3, wobei jede lineare Funktion eine Vielzahl von Schwellenwerten aufweist und eine Anforderung einen zu erfüllenden Schwellenwert festlegt, wobei mindestens eine der folgenden Eigenschaften überprüft wird:

   - jeder Schwellenwert ist eine lineare Funktion des durch die Anforderung festgelegten Schwellenwerts, und
   - einer der Schwellenwerte ist das arithmetische Mittel von zwei anderen Schwellenwerten.

5. Verfahren nach einem der Ansprüche 1 bis 4, wobei Anzahl von Anforderungen größer als oder gleich wie 20 ist.

6. Verfahren nach einem der Ansprüche 1 bis 5, wobei das Verfolgungssystem Schätzungen von Messungen anhand früherer Daten von mehreren Sensoren bereitstellt, wobei jede Bewertungsfunktion mindestens eine der geschätzten Messungen als Eingang nimmt.

7. Verfahren nach Anspruch 6, wobei jede geschätzte Messung mit einem Fehler behaftet ist, wobei jede Bewertungsfunktion auch diesen Fehler berücksichtigt.

8. Verfahren nach einem der Ansprüche 1 bis 7, wobei das Verfahren ferner einen Schritt eines Gruppierens bestimmter Bewertungswerte umfasst, um Punktzahlen zu erlangen, die die Konformität des Verfolgungssystems mit einem Teil der Anforderungen aus dem Satz von Anforderungen bewerten, die einer bestimmten Größe entsprechen, wobei eine Größe beispielsweise Verfügbarkeit, Kontinuität, Integrität, Zeit oder Konsistenz ist.

9. Computerprogrammprodukt, umfassend einen lesbaren Informationsträger, auf dem ein Computerprogramm umfassend Programmanweisungen gespeichert ist, wobei das Computerprogramm auf eine Datenverarbeitungseinheit geladen werden kann und angepasst ist, um die Durchführung eines Verfahrens nach einem der Ansprüche 1 bis 8 zu bewirken, wenn das Computerprogramm auf der Datenverarbeitungseinheit durchgeführt wird.

10. Lesbarer Informationsträger, auf dem ein Computerprogramm umfassend Programmanweisungen gespeichert ist, wobei das Computerprogramm auf eine Datenverarbeitungseinheit geladen werden kann und angepasst ist, um die Durchführung eines Verfahrens nach einem der Ansprüche 1 bis 8 zu bewirken, wenn das Computerprogramm auf der Datenverarbeitungseinheit durchgeführt wird.

**Claims**

1. A method for evaluating the conformity of a tracking system to a set of requirements, at least one requirement being a mandatory requirement and at least one requirement being a recommended requirement, each requirement setting that a physical property be superior or equal to a threshold or that a physical property be inferior or equal to a threshold, the evaluation method being carried out by computer, the evaluation method including at least the following steps:

   - supervised learning of an evaluation function of the conformity to a requirement in the form of a piecewise linear function, the linear function including at least three pieces, preferably at least six pieces, in order to obtain learned evaluation functions, each evaluation function associating a physical property to a value,
   - application of the learned evaluation functions to the tracking system in order to obtain evaluation values, and
   - use of the evaluation values to obtain an overall score evaluating the conformity of the tracking system to the set of requirements,
   the method including computing an overall score for each type of requirement by aggregating evaluation functions of all of the requirements of the considered type, the overall score evaluating the conformity of the tracking system to the set of requirements being obtained by aggregating the overall scores by requirement type,
or
the method further including:

- a step for supervised learning of aggregation functions of the evaluation values, the aggregation function evaluating the conformity of the tracking system to a portion of the requirements of the set of requirements corresponding to a particular property, and
- a usage step comprising using the evaluation values and the learned aggregation functions to obtain a value for each portion of the requirements of the set of requirements corresponding to a particular property and using the values obtained during the use as well as aggregation functions to obtain the overall score.

2. The method according to claim 1, wherein, in the supervised learning step, each linear function is a linear function with five pieces.

3. The method according to claim 2, wherein a requirement sets a threshold to be respected, at least one of the following properties is verified:

- each linear function includes a plurality of thresholds, one of the thresholds being the threshold set by the requirement,
- each linear function includes a plurality of thresholds, the threshold having the second lowest value by the evaluation function being the threshold set by the requirement,
- each linear function includes four thresholds, the first threshold corresponding to a maximum value by the evaluation function, the second threshold corresponding to 88% of the maximum value, the third threshold corresponding to 35% of the maximum value and the fourth threshold to 0, and
- each linear function includes four thresholds, the first threshold corresponding to a maximum value by the evaluation function, the second threshold corresponding to 80% of the maximum value, the third threshold corresponding to 20% of the maximum value and the fourth threshold to 0.

4. The method according to any one of claims 1 to 3, wherein each linear function includes a plurality of thresholds and a requirement sets a threshold to be respected, at least one of the following properties being verified:

- each threshold is a linear function of the threshold set by the requirement, and
- one of the thresholds is the arithmetic average of the other two thresholds.

5. The method according to any one of claims 1 to 4, wherein the number of requirements is greater than or equal to 20.

6. The method according to any one of claims 1 to 5, wherein the tracking system provides estimates of measurements from earlier data from several sensors, each evaluation function using, as input, at least one of said estimated measurements.

7. The method according to claim 6, wherein each estimated measurement is tainted by an error, each evaluation function also taking said error into account.

8. The method according to any one of claims 1 to 7, wherein the method further includes a step for grouping certain evaluation values together to obtain scores evaluating the conformity of the tracking system to a portion of the requirements of the set of requirements corresponding to a particular property, a property for example being the availability, continuity, integrity, time or coherence.

9. A computer program product including a readable information medium, on which a computer program is stored comprising program instructions, the computer program being able to be loaded on a data processing unit and suitable for driving the implementation of a method according to any one of claims 1 to 8 when the computer program is implemented on the data processing unit.

10. A readable information medium storing a computer program comprising program instructions, the computer program being able to be loaded on a data processing unit and suitable for driving the implementation of a method according to any one of claims 1 to 8 when the computer program is implemented on the data processing unit.

FIG.1

FIG.2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **PEK HUI FOO et al.** Application of intent inference for surveillance and conformance monitoring to aid human cognition. *10th International Conférence on information Fusion,* 2007

- *EUROCONTROL Spécification for ATM Surveillance System Performance,* Mars 2012, vol. 1, ISBN 978-2-87497-022-1